# EUROPÄISCHE PATENTANMELDUNG

(11) **EP 2 520 160 A1**
(43) Veröffentlichungstag der Anmeldung: **07.11.2012**
(21) Anmeldenummer: 12166427.0
(22) Anmeldetag: 02.05.2012
(51) Int. Cl.: A01G 9/08

(54) **Vorrichtung zum Positionieren von Pflanztöpfen**

(30) Priorität: 06.05.2011 DE 102011100670
(71) Anmelder: Jacke, Ernst, 27404 Elsdorf (DE)
(72) Erfinder: Jacke, Ernst, 27404 Elsdorf (DE)
(74) Vertreter: Siekmann, Gunnar

(57) **Zusammenfassung**

Die Erfindung betrifft eine Vorrichtung zum Positionieren von Pflanztöpfen mit wenigstens einem quer zu einer Arbeitsrichtung angeordneten, umlaufenden Pflanztopfaufstellband (3) und mindestens einer dem Pflanztopfaufstellband (3) zugeordneten Absetzeinrichtung (4), die in Pflanztopfabstand angeordnete Pflanztopfhalter (12) aufweist. Der Pflanztopfabstand auf dem Pflanztopfaufstellband (3) ist durch wenigstens eine zumindest abschnittsweise parallel zu dem Pflanztopfaufstellband (3) angeordnete Positioniereinrichtung (8) vorgegeben, wobei die Positioniereinrichtung (8) an Umlenkelementen (11,11') umlaufend ausgebildet ist. Dabei weist das Pflanztopfaufstellband (3) vorteilhafterweise eine höhere Umlaufgeschwindigkeit als die Positioniereinrichtung (8) auf.

## Beschreibung

Die Erfindung betrifft eine Vorrichtung zum Positionieren von Pflanztöpfen mit wenigstens einem quer zu einer Arbeitsrichtung angeordneten, umlaufenden Pflanztopfaufstellband und wenigstens einer dem Pflanztopfaufstellband zugeordneten Absetzeinrichtung, die in Pflanztopfabstand angeordnete Pflanztopfhalter aufweist, wobei der Pflanztopfabstand auf dem Pflanztopfaufstellband durch wenigstens eine zumindest abschnittsweise parallel zu dem Pflanztopfaufstellband angeordnete Positioniereinrichtung vorgegeben ist.

Vor allem in größeren Gärtnereien und Pflanzenbaubetrieben werden derartige Vorrichtungen eingesetzt, um die Arbeitsabläufe zu optimieren und große Flächenleistungen zu erbringen. Aus der DE 90 10 236 U1 geht beispielsweise ein Pflanztisch hervor, der einen Vereinzelungsrechen mit horizontal ausgerichteten Vereinzelungszinken aufweist. Diese Vereinzelungszinken sind gegenüber einer Arbeitsrichtung in einem Winkel angestellt und legen den Abstand der Pflanzen zueinander fest. In Pflanztöpfen heranzuzüchtende Pflanzen können so auf besonders einfache Weise in optimalem Abstand zueinander auf großen Flächen angeordnet werden. Mit einer weiteren Vorrichtung kann nacheinander jeweils eine Reihe Pflanztöpfe quer zur Arbeitsrichtung abgesetzt werden. Der Abstand zwischen den Pflanztöpfen einer Reihe ist durch die Positioniereinrichtung der Vorrichtung vorgegeben. Eine bekannte Positioniereinrichtung weist dazu ein System auf, bei dem ein in Laufrichtung des Pflanztopfaufstellbandes vorderer Pflanztopf den jeweils nachfolgenden Pflanztopf über verschwenkbare Abstandshalter verklemmt. Jedoch weist dieses System erhebliche Nachteile auf. Schon geringfügige Abänderungen der Pflanztöpfe hinsichtlich Größe oder Form führen dazu, dass die Abstandshalter in einem anderen Winkel angestellt sind und die vorbestimmten Abstände zwischen den Pflanztöpfen nicht eingehalten werden. Kleinere Pflanztöpfe werden beispielsweise nicht zwischen den verschwenkbaren Abstandshaltern verklemmt und rutschen hindurch. Die Pflanztöpfe können dann beim Aufnehmen mit der Absetzeinrichtung von dieser umgestoßen werden. Zudem verhindern einzelne, auf dem Pflanztopfaufstellband umgefallene Pflanztöpfe, dass die nachfolgenden Pflanztöpfe ordnungsgemäß in den vorbestimmten Abständen positioniert werden. Die Bergung der Pflanztöpfe bzw. die Behebung des Problems ist dabei sehr aufwendig, da die Vorrichtung nur von einer Seite zugänglich ist und zumeist mehrere Pflanztöpfe gleichzeitig zu bergen sind.

Der Erfindung liegt die Aufgabe zugrunde, eine Positioniereinrichtung dahingehend zu verbessern, dass ein sicheres Positionieren der Pflanztöpfe unabhängig voneinander gewährleistet werden kann.

Die Lösung dieser Aufgabe erfolgt mit den Merkmalen des Patentanspruches 1. Weiterbildungen und vorteilhafte Ausgestaltungen ergeben sich aus den Unteransprüchen.

Die erfindungsgemäße Vorrichtung zum Positionieren von Pflanztöpfen mit wenigstens einem quer zu einer Arbeitsrichtung angeordneten, umlaufenden Pflanztopfaufstellband und mindestens einer dem Pflanztopfaufstellband zugeordneten Absetzeinrichtung, die in Pflanztopfabstand angeordnete Pflanztopfhalter aufweist, wobei der Pflanztopfabstand auf dem Pflanztopfaufstellband durch wenigstens eine zumindest abschnittsweise parallel zu dem Pflanztopfaufstellband angeordnete Positioniereinrichtung vorgegeben ist, zeichnet sich dadurch aus, dass die Positioniereinrichtung an Umlenkelementen umlaufend ausgebildet ist. Sowohl die Positioniereinrichtung als auch das Pflanztopfaufstellband weisen eine gemeinsame, parallel zueinander ausgerichtete Laufrichtung auf, so dass die Pflanztöpfe auf einfache Weise in einem vorbestimmten Abstand zueinander von der Positioniereinrichtung erfasst und angeordnet werden.

Das Pflanztopfaufstellband weist dabei vorteilhafterweise eine höhere Umlaufgeschwindigkeit als die Positioniereinrichtung auf. Die Umlaufgeschwindigkeit des Pflanztopfaufstellbandes ist dabei insbesondere mindestens 10 % höher, vorzugsweise mindestens 20 % höher, als die Umlaufgeschwindigkeit der Positioniereinrichtung. Die auf dem Pflanztopfaufstellband aufstehenden Pflanztöpfe werden somit auf dem Pflanztopfaufstellband an eine jeweils nächstfreie Position der Positioniereinrichtung befördert und von der Positioniereinrichtung an der jeweiligen Position gehalten. Unregelmäßige, verschieden große Abstände zwischen den einzelnen Pflanztöpfen können aufgrund der höheren Umlaufgeschwindigkeit des Pflanztopfaufstellbandes ausgeglichen werden, so dass der Pflanztopfabstand an der Positioniereinrichtung einheitlich ist und dem Abstand der Pflanztopfhalter der Absetzeinrichtung entspricht.

Um die Pflanztöpfe mit der Positioniereinrichtung halten zu können, ist nach einer Weiterbildung vorgesehen, dass die Positioniereinrichtung als eine Förderkette mit Abstandshaltern ausgebildet ist. Jedem der Abstandshalter ist dann ein Pflanztopf zugeordnet, wobei der Abstand der Abstandshalter zueinander dem Abstand der Pflanztopfhalter zueinander entspricht.

Vorteilhafterweise weist die Positioniereinrichtung als Abstandshalter ausgebildete, horizontal abstehende Stifte auf, die zumindest in einem Aufstellbereich für die Pflanztöpfe über dem Pflanztopfaufstellband angeordnet sind. Die auf dem Pflanztopfaufstellband aufstehenden Pflanztöpfe werden dann aufgrund der höheren Umlaufgeschwindigkeit des Pflanztopfaufstellbandes gegen die als Abstandshalter ausgebildeten, horizontal abstehenden Stifte gedrückt und an diesen gehalten.

Zum Absetzen der Pflanztöpfe wird mit Vorteil zumindest die Positioniereinrichtung angehalten, wozu dieser eine Abschalteinheit zugeordnet ist. In einer bevorzugten Ausführung ist der Positioniereinrichtung eine mechanische Abschalt-einheit zugeordnet, welche beispielsweise einen Tastfühler aufweist. Dieser Tastfühler ist dann in einem Endbereich des Pflanztopfaufstellbandes anzuordnen, wobei die auf dem Pflanztopfaufstellband aufstehenden Pflanztöpfe auf den Endbereich mit dem Tastfühler zulaufen. Der Tastfühler ist in einer bevorzugten Ausführung ähnlich den Abstandshaltern über dem Pflanztopfaufstellband angeordnet. Über einen an einem ersten Abstandshalter der Positioniereinrichtung gehaltenen Pflanztopf wird dann die Abschalteinheit bzw. deren Tastfühler betätigt. Bei angehaltener Positioniereinrichtung können die Pflanztöpfe dann problemlos mit den Pflanztopfhaltern der Absetzeinrichtung angehoben und auf dem Boden abgesetzt werden.

In einer besonders bevorzugten Ausführung wird gleichzeitig mit der Positioniereinrichtung die Zuführung weiterer Pflanztöpfe unterbrochen, indem beispielsweise das Pflanztopfaufstellband angehalten wird.

Die Pflanztopfhalter der Absetzeinrichtung sind vorteilhafterweise als Zinken ausgebildet, wobei jeweils zwei Zinken einen Pflanztopf umfassen. Zudem können die Zinken eines Pflanztopfhalters miteinander verbunden und halbkreisförmig ausgeformt sein, um den Pflanztopf möglichst optimal zu sichern. Anstatt einzelner Zinken können die Pflanztopfhalter beispielsweise auch als in ein Blech eingeformte Ausnehmungen ausgebildet sein.

Nach einer Weiterbildung ist vorgesehen, dass dem Pflanztopfaufstellband eine Lichtschranke zugeordnet ist. Mit dieser Lichtschranke wird die Positioniereinrichtung gestartet, wobei die Lichtschranke ankommende Pflanztöpfe registriert. Die Positioniereinrichtung wird somit nur angetrieben, wenn dem Pflanztopfaufstellband auch Pflanztöpfe zugeführt werden.

Um eine möglichst geradlinige Anordnung mit gleichmäßigem Pflanztopfabstand der positionierten Pflanztöpfe zu gewährleisten, ist nach einer anderen Weiterbildung vorgesehen, dass die Arbeitsrichtung durch eine der Vorrichtung zugeordnete Spurstangenführung vorgegeben ist. Durch die Führung an einer Spurstange werden die Pflanztöpfe auch über längere Wegstrecken hintereinander in Reihe abgestellt, so dass beispielsweise eine effiziente Anzucht der Pflanzen durch eine automatische Bewässerung gewährleistet ist. Zusätzlich zu der Spurstange ist der Vorrichtung dann auch ein Fahrwerk zuzuordnen und zwischen den aufgestellten Pflanztöpfen sind Fahrspuren vorzusehen. Im Bereich der Fahrspuren sind vorteilhafterweise keine Pflanztöpfe anzuordnen, so dass insbesondere die Absetzeinrichtung mehrteilig aufgebaut sein kann. Weiter sind die Abstände der Abstandshalter der Positioniereinrichtung hier anzupassen.

Nachfolgend wird die Erfindung anhand eines Ausführungsbeispiels in der Zeichnung dargestellt. Es zeigen:
- Fig. 1:: eine Vorrichtung zum Positionieren von Pflanztöpfen in perspektivischer Ansicht;
- Fig. 2:: einen ersten Abschnitt eines Pflanztopfaufstellbandes der Vorrichtung aus Fig. 1 in perspektivischer Ansicht;
- Fig. 3:: einen zweiten Abschnitt des Pflanztopfaufstellbandes aus Fig. 2 in perspektivischer Ansicht, und
- Fig. 4:: eine Draufsicht auf den zweiten Abschnitt des Pflanztopfaufstellbandes aus Fig. 5.

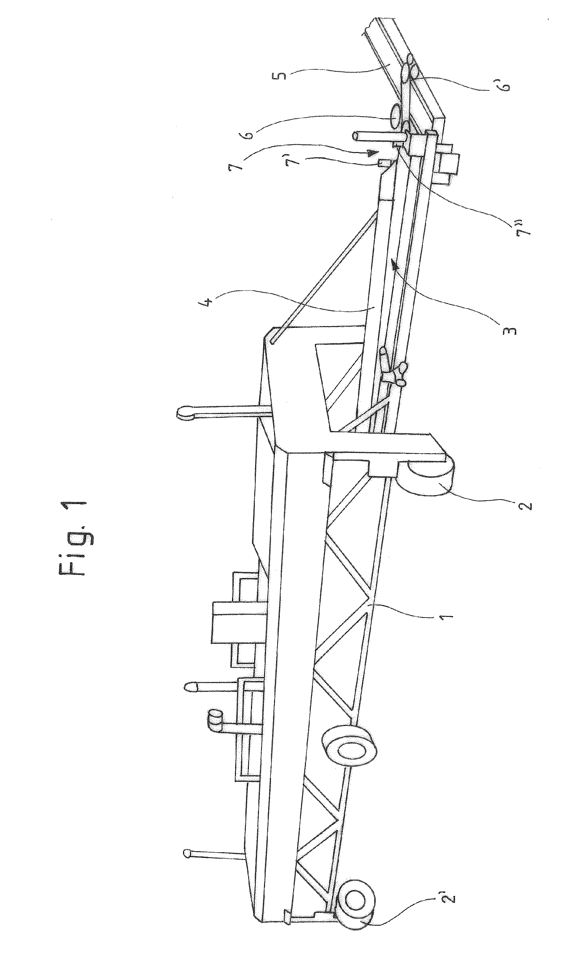

Die Vorrichtung in Fig. 1 weist einen Gestellrahmen 1 mit einem eine Arbeitsrichtung festlegenden Fahrwerk 2, 2' auf. An dem Gestellrahmen 1 sind rechtwinklig zu der Arbeitsrichtung ein Pflanztopfaufstellband 3 und eine Absetzeinrichtung 4 angeordnet. Sowohl das Pflanztopfaufstellband 3 als auch die Absetzeinrichtung 4 ragen quer zu der Arbeitsrichtung über die Breite des Gestellrahmens 1 hinaus. An einem ersten Endbereich des Pflanztopfaufstellbandes 3 ist rechtwinklig zu dem Pflanztopfaufstellband 3 ein Zuführförderband 5 angeordnet. Über das Zuführförderband 5 werden zu positionierende Pflanztöpfe zum Pflanztopfaufstellband 3 gefördert, wobei in dem Bereich zwischen Pflanztopfaufstellband 3 und Zuführförderband 5 eine Umlenkeinrichtung 6, 6' aus mehreren Umlenkrollen und einem zumindest um einen Teil der Umlenkrollen gespannten Umlenkband angeordnet ist. Dem ersten Endbereich des Pflanztopfaufstellbandes 3 ist weiterhin eine Lichtschranke 7 zugeordnet. Mit der Lichtschranke 7 können ankommende Pflanztöpfe automatisch erkannt werden.

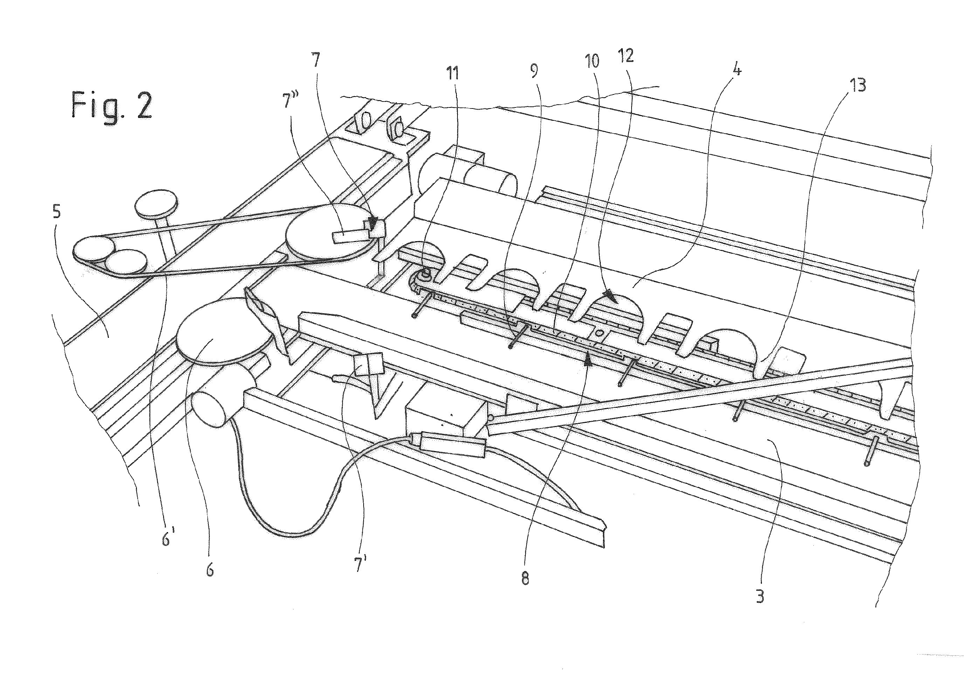

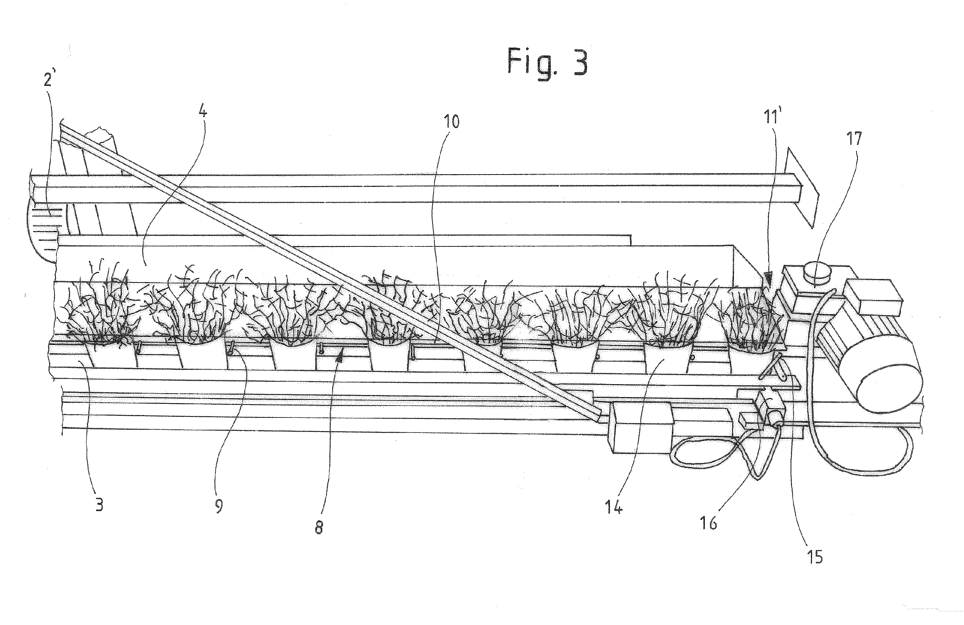

Fig. 2 zeigt einen Abschnitt des Pflanztopfaufstellbandes 3 in dem der erste Endbereich mit der Lichtschranke 7 dargestellt ist. Die Lichtschranke 7 weist einen Sender 7' und einem Empfänger 7" auf. Dabei sind Sender 7' und Empfänger 7" der Lichtschranke 7 diagonal gegenüberliegend an dem ersten Endbereich des Pflanztopfaufstellbandes 3 angeordnet. Parallel zu dem Pflanztopfaufstellband 3 ist eine umlaufende Positioniereinrichtung 8 zu erkennen. Diese Positioniereinrichtung 8 weist in vorbestimmten Abständen Abstandshalter 9 auf, die horizontal über dem Pflanztopfaufstellband 3 ausgerichtet sind. Zudem weist die Positioniereinrichtung 8 eine umlaufende Förderkette 10 auf, an der die Abstandshalter 9 angeordnet sind. Die Umlenkung der Förderkette 10 erfolgt an den Umlenkelementen 11 in Fig. 2 und 11 in Fig. 3.

Die Absetzeinrichtung 4 weist wenigstens ein parallel zu dem Pflanztopfaufstellband 3 rechtwinklig gebogenes Blech auf, wobei ein Abschnitt des Bleches horizontal angeordnet ist und als Pflanztopfhalter 12 ausgebildete Zinken 13 aufweist. Jeweils zwei Zinken 13 bilden dabei einen Pflanztopfhalter 12, der einen an Pflanztöpfe angepassten Aufnahmebereich zwischen den Zinken 13 aufweist. Der Abstand der Pflanztopfhalter 12 zueinander entspricht dem der Abstandshalter 9 zueinander.

Dem ersten Endbereich des Pflanztopfaufstellbandes 3 entgegengesetzt ist ein zweiter Endbereich des Pflanztopfaufstellbandes 3. In Laufrichtung des Pflanztopfaufstellbandes 3 und der Positioniereinrichtung 8 bildet der erste Endbereich einen Anfang und der zweite Endbereich ein Ende aus, zu dem auf dem Pflanztopfaufstellband 3 aufstehende Pflanztöpfe gefördert werden. Der zweite Endbereich ist in Fig. 3 mit auf dem Pflanztopfaufstellband 3 aufstehenden Pflanztöpfen 14 dargestellt. Aufstellband 3, Absetzeinrichtung 4 und Positioniereinrichtung 8 sind wie im ersten Endbereich und über ihre gesamte Länge parallel zueinander angeordnet. Die auf dem Pflanztopfaufstellband 3 aufstehenden Pflanztöpfe 14 liegen dabei jeweils an einem Abstandshalter 9 an, so dass alle Pflanztöpfe 14 in gleichem Abstand zueinander positioniert sind. In Laufrichtung des Pflanztopfaufstellbandes 3 vor dem ersten Pflanztopf 14 ist ein Tastfühler 15 einer Abschalteinheit 16 zu erkennen. Der Tastfühler 15 ist aufgrund eines ersten auf dem Pflanztopfaufstellband 3 aufstehenden Pflanztopfes 14 aus einem rechten Winkel ausgelenkt, so dass die Abschaltung betätigt ist.

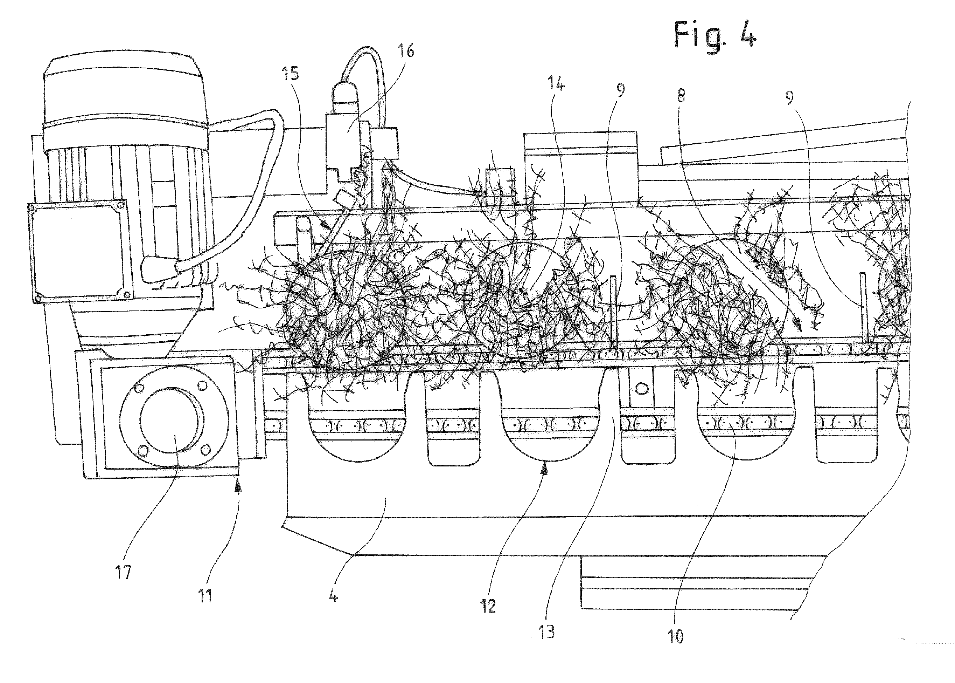

Die Auslenkung des Tastfühlers 15 ist insbesondere in Fig. 4 deutlich zu erkennen. Diese Fig. 4 zeigt weiterhin auch die an die Form der Pflanztöpfe 14 angepassten Pflanztopfhalter 12 der Absetzeinrichtung 4 sowie einen oberhalb des Umlenkelementes 11' angeordneten Antrieb 17 der Positioniereinrichtung 8.

Beim Betrieb der Vorrichtung werden die zu positionierenden Pflanztöpfe 14 auf das Zuführförderband 5 gestellt und zu dem Pflanztopfaufstellband 3 gefördert. Sobald der erste Pflanztopf 14 die Lichtschranke 7 des Pflanztopfaufstellbandes 3 passiert, wird die umlaufende Positioniereinrichtung 8 in Bewegung versetzt. Dadurch, dass die Umlaufgeschwindigkeit der Positioniereinrichtung 8 geringer ist als die des Pflanztopfaufstellbandes 3, ist erreicht, dass die dem Pflanztopfaufstellband 3 zugeführten Pflanztöpfe 14 jeweils bis zu einem nächsten Abstandshalter 9 gefördert werden und gegen diesen drücken. Dabei ist sichergestellt, dass jeweils einem Abstandshalter 9 ein Pflanztopf 14 zugeordnet wird. Die Positioniereinrichtung 8 läuft dabei soweit, bis der erste Pflanztopf 14 den zweiten Endbereich des Pflanztopfaufstellbandes 3 erreicht hat und den Tastfühler 15 der Abschalteinheit 16 betätigt. Die jetzt im vorgesehenen Pflanztopfabstand zueinander angeordneten Pflanztöpfe 14 können dann mit der Absetzeinrichtung 4 von dem Pflanztopfaufstellband 3 abgehoben und auf einem Boden unterhalb der Vorrichtung abgesetzt werden. Dazu greift jeweils ein Pflanztopfhalter 12 einen der Pflanztöpfe 14, hebt ihn jeweils zwischen den Zinken 13 an und setzt ihn ab. Anschließend verfährt die Vorrichtung um den Pflanztopfabstand auf dem Pflanztopfaufstellband 3 um eine Reihe zur nächsten vor. Aufgrund des entlasteten Tastfühlers 15 wird gleichzeitig das Pflanztopfaufstellband 3 und die Positioniereinrichtung 8 freigegeben, so dass über das Zuführförderband 5 und die Lichtschranke 7 weitere Pflanztöpfe 14 zugeführt werden können.

## Patentansprüche

1. Vorrichtung zum Positionieren von Pflanztöpfen mit wenigstens einem quer zu einer Arbeitsrichtung angeordneten, umlaufenden Pflanztopfaufstellband und mindestens einer dem Pflanztopfaufstellband zugeordneten Absetzeinrichtung, die in Pflanztopfabstand angeordnete Pflanztopfhalter aufweist, wobei der Pflanztopfabstand auf dem Pflanztopfaufstellband durch wenigstens eine zumindest abschnittsweise parallel zu dem Pflanztopfaufstellband angeordnete Positioniereinrichtung vorgegeben ist,
**dadurch gekennzeichnet,**
**dass** die Positioniereinrichtung (8) an Umlenkelementen (11, 11') umlaufend ausgebildet ist.

2. Vorrichtung nach Anspruch 1, **dadurch gekennzeichnet, dass** das Pflanztopfaufstellband (3) eine höhere Umlaufgeschwindigkeit aufweist als die Positioniereinrichtung (8).

3. Vorrichtung nach einem der Ansprüche 1 oder 2, **dadurch gekennzeichnet, dass** die Positioniereinrichtung (8) als eine Förderkette (10) mit Abstandshaltern (9) ausgebildet ist.

4. Vorrichtung nach einem der Ansprüche 1 bis 3, **dadurch gekennzeichnet, dass** die Positioniereinrichtung (8) als Abstandshalter (9) ausgebildete, horizontal abstehende Stifte aufweist, die zumindest in einem Aufstellbereich für die Pflanztöpfe (14) über dem Pflanztopfaufstellband (3) angeordnet sind.

5. Vorrichtung nach einem der Ansprüche 1 bis 4, **dadurch gekennzeichnet, dass** zumindest der Positioniereinrichtung (8) eine Abschalteinheit (16) zugeordnet ist.

6. Vorrichtung nach einem der Ansprüche 1 bis 5, **dadurch gekennzeichnet, dass** zumindest der Positioniereinrichtung (8) eine mechanische Abschalteinheit (16) mit einem Tastfühler (15) zugeordnet ist.

7. Vorrichtung nach einem der Ansprüche 5 oder 6, **dadurch gekennzeichnet, dass** die Abschalteinheit (16) gleichzeitig der Positioniereinrichtung (8) und dem Pflanztopfaufstellband (3) zugeordnet ist.

8. Vorrichtung nach einem der Ansprüche 1 bis 7, **dadurch gekennzeichnet, dass** die Pflanztopfhalter (12) der Absetzeinrichtung (4) als Zinken (13) ausgebildet sind, wobei jeweils zwei Zinken (13) einen Pflanztopf (14) umfassen.

9. Vorrichtung nach einem der Ansprüche 1 bis 8, **dadurch gekennzeichnet, dass** dem Pflanztopfaufstellband (3) eine Lichtschranke (7) zugeordnet ist.

10. Vorrichtung nach einem der Ansprüche 1 bis 9, **dadurch gekennzeichnet, dass** die Arbeitsrichtung durch eine der Vorrichtung zugeordnete Spurstangenführung vorgegeben ist.
